# EUROPEAN PATENT APPLICATION

(11) **EP 4 834 737 A1**
(43) Date of publication of application: **04.11.2026**
(21) Application number: 26176033.4
(22) Date of filing: 01.05.2026
(51) Int. Cl.: B62D 55/104, B62D 55/06, B62D 55/116

(54) **CRAWLER VEHICLE**

(30) Priority: 02.05.2025 US 202519197025
(71) Applicant: Metalcraft of Mayville, Inc., Mayville, Wisconsin 53050 (US)
(72) Inventor: PATZER, Joseph, Fond du Lac, 54935 (US); TRICE, Shawn, Menasha, 54952 (US)
(74) Representative: Keltie LLP

(57) **Abstract**

A crawler vehicle, such as a robotic slope mower, includes at least one track assembly that includes an endless track, such as a belt. The track is supported on front and rear rollers which are supported on a frame and about which the track rides, fixed bogie assemblies, and at least one floating bogie assembly that is located longitudinally between the fixed bogie assemblies. Each floating bogie assembly includes a bogie roller support that is mounted on the frame so as to be movable vertically relative to the frame while providing for at least two degrees of freedom of movement for the supported bogie roller, which. A spring biases the bogie roller support toward the track. The floating bogie assemblies may be configured to bear at last 50%, and even more than 80%, of the weight of the vehicle when the vehicle is traveling over flat, level ground.

## Description

### CROSS-REERENCE TO A RELATED APPLICATION

### FIELD OF THE INVENTION

The invention relates generally to crawler vehicles and, in particular, to a crawler vehicle with pivoting bogies and/or a deck lift mechanism. The invention additionally relates to a method of operating such a vehicle.

### BACKGROUND OF THE INVENTION

So-called crawler vehicles are used in a wide variety of industrial, construction, agricultural, and utility applications. Such vehicles typically are characterized by being driven by spaced driven tracks that collectively form a crawler. Most crawlers have two laterally spaced, longitudinally extending endless tracks of identical construction. The tracks may be formed of a metal chain in relatively heavy duty vehicles or a toothed rubber belt in relatively light duty vehicles. The chain or belt rides over an upper driven roller or sprocket, rear and front lower idler rollers, and a number of smaller idler bogie assemblies positioned between the rear and front rear idler rollers. Some machines employ "floating" bogie assemblies that can move vertically relative to the machine's frame as the track traverses an obstruction such as a rock or experiences an abrupt change in slope while maximize downward contact pressure between the bogie assemblies and the track. However, known floating bogie assemblies are only partially effective at achieving these goals because any biasing forces imposed on the bogie assembly's roller(s) are relatively low, leading to substantial variation in load support amongst the bogie assemblies as the machine traverses uneven ground.

In addition, known floating assemblies are relatively ineffective at accommodating shear forces that are imposed on the track, for example, while moving along the side of a slope or performing sharp turns on uneven ground. The imposition of shear forces and minimal contact between a bogie roller and the track can cause the track to disengage from the bogie rollers and derail.

Some crawler type vehicles have decks that are vertically movable relative to the tracks. For example, commercial and agricultural mowers have decks that can be raised and lowered for transport and/or to vary the mower's cutting depth. The decks typically swing about an arc as they are raised and lowered. This movement imposes a number of strains on the vehicle's frame as it alters the machine's center of mass. This concern is particularly acute when a large percentage of the machine's weight is borne by the raiseable deck, which is the case when the machine's prime mover and related components are supported on the deck. The swinging movement also can result in tilting of the deck, leading to uneven cuts at the limits of the deck's travel. These concerns impose an effective limit on the range of vertical deck movement.

The need therefore exists to provide a crawler type vehicle whose tracks have floating bogie assemblies that reliably distribute the weight of the vehicle amongst the bogie assemblies, even as the vehicle traverses uneven ground.

The need additionally exists to provide a crawler type vehicle having bogie assemblies that are configured to accommodate shear forces imposed on the tracks during operation.

The need additionally exists to provide a mower having a deck that can be raised and lowered through a relatively large stroke of 7" or more through an at least essentially purely vertical stroke.

### SUMMARY OF THE INVENTION

In accordance with an aspect of the invention, a vehicle is provided that includes a frame, a prime mover that is supported on the frame, and a crawler assembly that supports the prime mover on the ground, the crawler assembly including at least one track assembly. The track assembly includes an endless track, such as a belt, and front and rear rotating supports, such as idler rollers, which are supported on the frame and about which the track rides. Also provided are first and second fixed bogie assemblies that are located longitudinally between the front and rear supports, and at least one floating bogie assembly that is located longitudinally between the fixed bogie assemblies. Each fixed bogie assembly includes a support that is fixed from vertical motion relative to the frame and at least one bogie roller that is rotatably mounted on the support and that engages the track. Each floating bogie assembly includes a bogie roller support that is mounted on the frame so as to be movable vertically relative to the frame, at least one floating bogie roller that is rotatably mounted on the bogie roller support and that engages the track, and a spring that biases the floating bogie roller support toward the track.

Track assemblies may be provided on opposed sides of the vehicle. In this case, the floating bogie assemblies may be configured to bear at last 50%, and even more than 80%, of the weight of the vehicle when the vehicle is traveling over flat, level ground.

The bogie roller support may provide for two degrees of freedom to better assure even track tensioning throughout various loading situations. For example, the bogie roller support may be provided with two pivot points, in which case the second pivot point can help the bogie roller maintain contact with depressions as the bogie rollers are able to travel lower than the ground line, if necessary.

In one example, the bogie roller support of the floating bogie assembly may include a primary support that is biased by the spring and that supports the bogie roller and a second support that is pivotally mounted on the primary support at a horizontal pivot axis. The secondary support may be rocker arm. In this case, the floating bogie assembly includes a first bogie roller that is rotatably mounted on the rocker arm in front of the pivot axis, and a second bogie roller that is rotatably mounted on the rocker arm behind the pivot axis. The primary support may include a pivot arm having a first end which is pivotally supported on the frame and a second end which is spaced longitudinally from the first end and on which the rocker arm is supported.

The vehicle may comprise a mower, such as a robotic slope mower, having a vertically movable deck on which driven blades are mounted and having a suspension system via which the deck is suspended from the frame so as to be moveable at least essentially purely vertically relative to the frame through a range of at least 5", more typically through a range of at least 7", and even 11" or more. The suspension system may comprise first through fourth pulleys that are mounted on the frame so as to rotate about respective horizontal axes, each pulley device having an arcuate support surface. The suspension system additionally includes first through fourth flexible lines each of which is connected to one of the pulleys and to the deck, and a drive assembly that is configured to drive all of the pulleys to rotate in unison through an equal arc to wind or unwind the flexible lines through an equal vertically linear stroke. The flexible lines may comprise chains, in which case the pulleys might more properly be considered chain followers.

In accordance with another aspect of the invention, a method of propelling a crawler type vehicle comprises driving endless tracks of first and second spaced track assemblies over first and second longitudinally spaced idler rollers, and applying tension to the track via first and second longitudinally spaced fixed bogie assemblies that are located longitudinally between the first and second idler rollers and at least one floating bogey assembly that is located longitudinally between the fixed bogies assemblies. Each floating bogie assembly includes at least one bogie roller, sometimes called a "bogie wheel", that is rotatably mounted on a floating bogie roller support that, in turn, is moveable vertically relative to the vehicle frame. The application of tension may include, using a spring, biasing the floating bogie roller support toward the track to promote engagement of the bogie roller with the track.

These and other aspects, advantages, and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention.

### BRIEF DESCRIPTION OF THE DRAWINGS

An exemplary embodiment of the invention is illustrated in the accompanying drawings in which like reference numerals represent like parts throughout, and in which:
FIG. 1 is a top front perspective view of a crawler vehicle, specifically a slope mower, constructed in accordance with the invention;
FIG. 2 is a side elevation view of the slope mower of FIG. 1;
FIG. 3 is a side elevation view of a track assembly of the slope mower of FIGS. 1 and 2;
FIG. 4 is a sectional end view taken generally along the lines 4-4 in FIG. 3;
FIG. 5 is an exploded isometric view of one of the floating bogie assemblies of the track assembly of FIGS. 3 and 4;
FIG. 6 is a side elevation view of a portion of the track assembly of FIGS. 3 and 4, showing the traversal of an obstruction;
FIG. 7 is a sectional end view taken generally along the lines 7-7 in FIG. 6;
FIG. 8 is an isometric view of a deck suspension system of the mower of FIGS. 1 and 2;
FIGS. 9 and 10 are fragmentary elevation views showing portions of the deck suspension system of FIG. 8 in two operational positions thereof; and
FIG. 11 is an isometric view of a portion of the deck suspension system of FIG. 8.

### DETAILED DESCRIPTION

By way of non-limiting example, a crawler vehicle in the form of a slope mower will now be described that is constructed in accordance with the invention, it being understood that at least many of the concepts discussed herein are applicable to other crawler vehicles as well. The slope mower is configured to cut grass, brush, or other vegetation on a relatively steep slope from 30° up to 50° or even more. This particular slope mower is configured to cut a relatively wide swath of approximately 52", but could be configured to cut narrower or wider swaths as well, typically ranging from 36" to 72". It is also remote controlled, though at least aspects of the invention apply to riding or stand-on mowers as well.

Referring initially to FGS. 1 and 2, the slope mower 20 includes a chassis or main frame 22 supported on the ground by left and right track assemblies 24 and 26 disposed on opposite lateral sides of the main frame 22. A cutter deck is 28 is mounted on the frame 22 so as to be vertically movable of the frame 22 between the track assemblies 24 and 26. The outer edges of the cutter deck 28 typically will be disposed within a few inches of inner edges of the track assemblies 24 and 26. A prime mover 30 is mounted on an upper surface of the cutter deck 28 between the track assemblies 24 and 26 The prime mover 30 supplies operational power to the track assemblies 24 and 26 and the mower's cutting blade assemblies (not shown). The prime mover 30 may be a gasoline or diesel engine acting alone or in conjunction with a battery bank charged by an alternator. In the latter, "hybrid" configuration, the battery bank may supply power to electric motors that drive the cutting blades and the driven sprockets of the track assembles 24 and 26. The slope mower 20 is propelled by applying a rotational drive force to sprockets 36 (one of which is associated with each track assembly 24 or 26) and is steered by driving the sprockets 36 of the respective track assemblies 24 and 26 at different speeds and even in opposite directions (i.e., forward or reverse). (The term "sprocket", as used herein, refers to any toothed or untoothed roller or wheel that drives an endless belt or chain to move.).

The track assemblies 24 and 26 are mirror images of each other. The following description of right track assembly 26 applies equally to left track assembly 24.

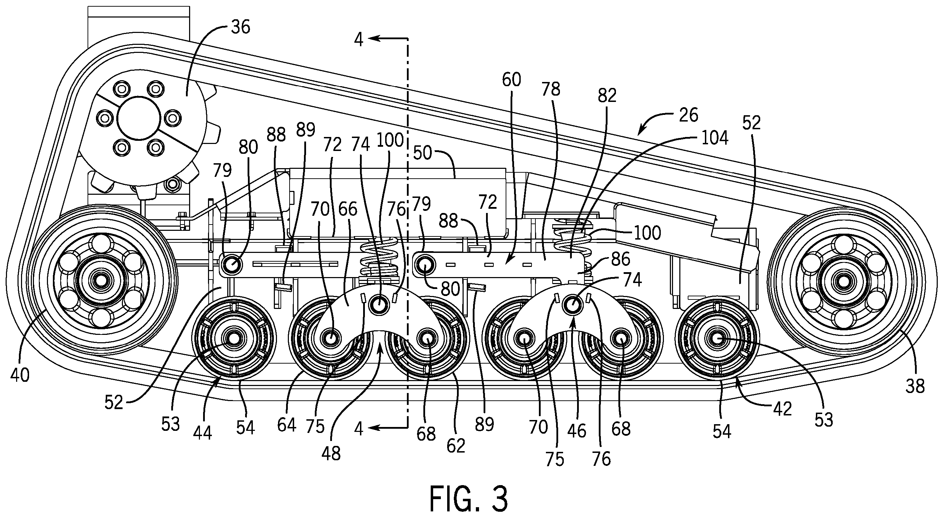

Referring especially to FIG. 3, track assembly 26 includes a driven endless tread that rides over an upper rear driven sprocket 36, front and rear lower idler rollers 38 and 40, and a number of smaller idler bogie assemblies positioned longitudinally between the rear and front rear idler rollers 38 and 40. The rollers 38 and 40 may have an outer peripheral surface that is smooth or that is toothed, grooved, or otherwise tailored to interface with an endless track of a particular design. Each track may, for example, comprises a belt or chain. Each track comprises a belt 34 in the illustrated example.

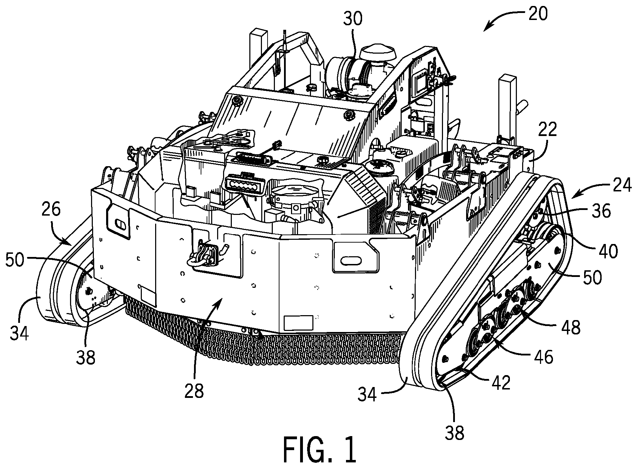

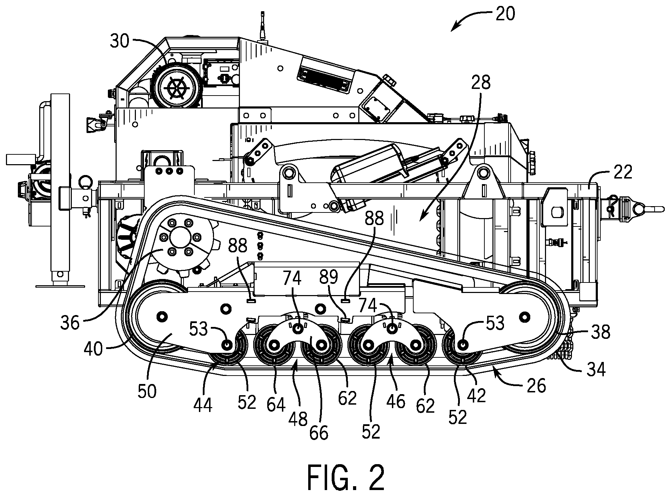

Referring to FIGS. 1-3, the idler bogie assemblies include front and rear fixed bogie assemblies 42 and 44 that are located longitudinally between the front and rear idler rollers 38 and 40, and at least one floating bogie assembly located longitudinally between the fixed bogie assemblies 42 and 44. Two, front and rear, floating idler bogies 46 and 48 are provided in the illustrated embodiment. The idler rollers 38, 40 and bogie assemblies 42, 44, 46, and 48 are supported on a frame assembly 50 that, in turn, is mounted on the main frame 22.

Referring especially to FIG. 3, each of the fixed bogie assemblies 40 and 42 includes a generally vertically extending stationary fixture 52 that extends downwardly from the frame assembly 50. A roller 54 is mounted on the fixture 52 so as to rotate about a horizontal axis 53. The outer peripheral surface of the roller 54 engages the inside surface of the belt 34. Each fixture 52 is inclined about 10 deg. relative to the vertical to improve tensioning of the belt 34 and reduce belt sag as the belt moves between the roller 54 and the adjacent idler roller 38 or 40.

Each of the floating bogie assemblies 46 and 48 has one or more rollers that can move vertically against a relatively strong biasing force so as to permit limited vertical movement of the adjacent portion of the belt 34 if the belt 34 encounters an obstruction or sharp change in slope while maintaining firm engagement with the belt 34, while maintaining firm contact with belt 34. The four floating bogie assemblies 46, 48 may be configured to bear at least 50 %, and more typically at least 80%, of the weight of the mower 20. This combination of characteristics greatly reduces the chances of belt derailment, especially in shear, which might otherwise occur, for example, when the slope mower is traveling along a steep side slope.

Referring now to FGS. 3-7, each floating bogie assembly 46 or 48 of this embodiment includes a bogie roller support 60 mounted on the frame assembly 50, at least one bogie roller 62 mounted on the bogie roller support 60, and a spring 100 that biases the bogie roller support and the bogie roller 62 downwardly toward the belt. The bogie roller support 60 may provide for two degrees of freedom for the floating bogie roller 62, helping the bogie roller 62 to maintain contact with depressions in the belt 34 if the track encounters a trench or hole that cause the associated section of the belt 34 to dip below the ground line Two bogie rollers 62, 64 are provided in each floating bogie assembly 46 or 48 in this embodiment. The bogie rollers 62, 64 of each floating bogie assembly 46 or 48 are mounted on opposite ends of a crescent shaped rocker arm 66 of the bogie roller support 60 by shafts 68, 70 so as to rotate about respective horizontal axes. The rocker arm 66, in turn, is pivotally mounted on a pivot arm 72 of the bogie roller support 60 by a pivot pin 74 so as to pivot about a center horizontal axis, thus providing the desired second degree of freedom. First and second stops 75, 76 limit the range of rocker arm pivoting as detailed below.

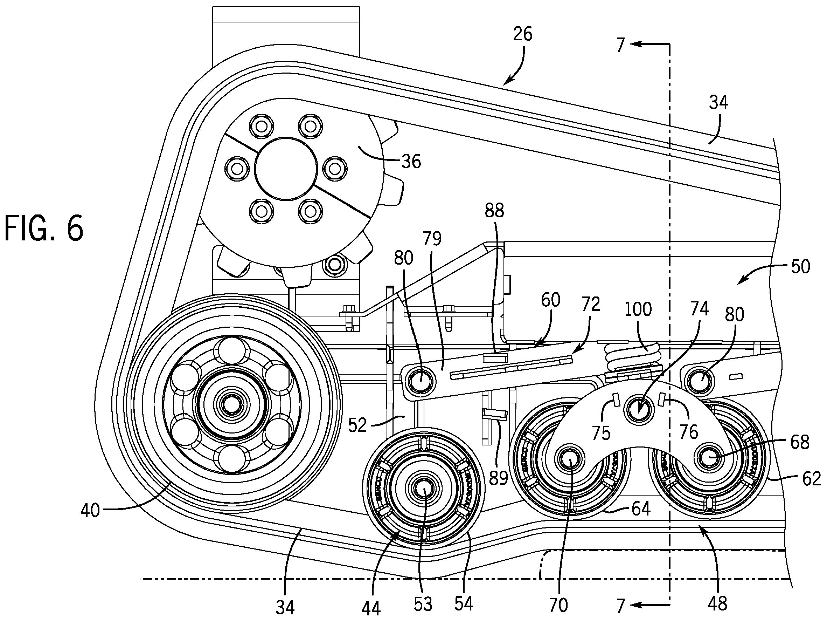

Still referring to FIGS 3-7, the pivot arm 72 of the bogie roller support 60 is generally L-shaped, having a first, generally horizontal leg 78 having first and second ends 79 and 82, and a second, generally vertical leg 86. The first end 79 of the horizontal leg 78 is supported on the frame assembly 50 so as to pivot about a horizontal pivot axis via a pivot pin 80. The second, vertical leg 86 of pivot arm 72 extends downwardly from the second end 82 of the first leg 78. The pivot pin 74 for the rocker arm 66 is located near the bottom end of the second leg 86. The maximum downward stroke of the pivot arm 72 may be set to exceed the maximum expected droop of the belt 34. In the illustrated example, the maximum track droop at standard tension is about 0.375", but can increase with varying load conditions. The outer end 82 of the first leg therefore should move downwardly from its uppermost position by about 0.5" to 2", and more typically about 0.75". That stroke is limited by upper and lower stationary stops 88 and 89 that are mounted on the frame assembly 50 above and below the first leg 78 of the pivot arm as seen in FIGS. 3 and 6.

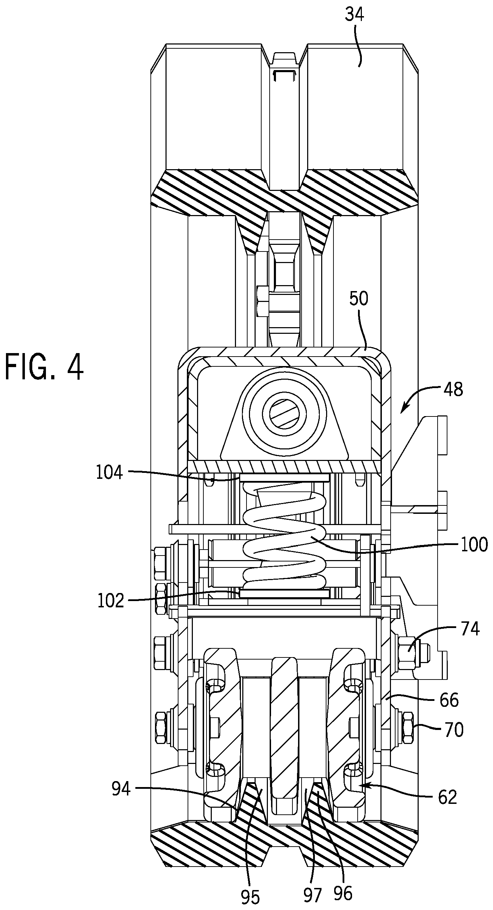

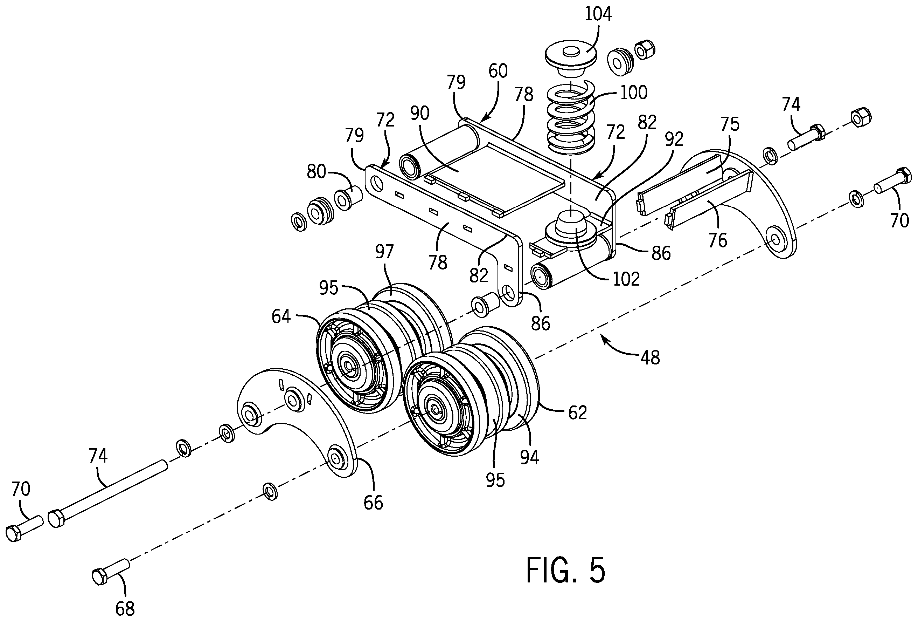

In practice, two rocker arms 66 and two pivot arms 72 are provided on opposite sides of each floating bogie assembly 46 or 48 so that each bogie roller 62 or 64 is supported at both of its opposed sides, as seen in FIGS. 4 and 5. The horizontal legs 78 of the pivot arms 72 are coupled together by a rigid plate 90. The vertical legs 86 of the pivot arms 72 are coupled together by a rigid cross plate 92. The stops 75, 76 take the form of generally L-shaped plates that extend inward from the inboard rocker arm 66 beneath the first leg 78 of the pivot arm 72. The arcuate stroke of the pivot arm 66 is limited in either direction from a centered position by engagement of one of the stops 75 or 76 with a respective edge of the cross plate 92. The centered position is one in which the pivot shafts 68 and 70 of the bogies rollers 62 and 64 lie in a common horizontal plane. The range of motion may be on the order of 5 deg. and 20 deg., and more typically about 10 deg., bidirectionally from the centered position. This provides for more than 0.25" of vertical bogie roller travel in addition to the 0.75% permitted by the spring 100.

A track belt typically has longitudinally-extending ribs, lugs, or other protrusions that engage a groove in the bogie roller so as inhibit lateral motion of the belt relative to the bogie roller, much as a drive belt engages a pulley groove. Referring especially to FIGS. 4 and 5, the belt 34 has two laterally-spaced, longitudinally extending protrusions or sets of lugs 94 and 96, each of which engages a corresponding groove 95, 97 in each bogie roller 62, 64.

Referring to FIGS. 3-5, each floating bogie assembly 46, 48 is biased toward the track belt 34 by a vertically extending compression spring 100. The term "compression spring" as used herein encompasses both a single spring and two or more springs acting together to provide the desired biasing effect. In the illustrated exemplary embodiment, the bottom end of the spring 100 is seated on a seat 102 that is mounted on the cross plate 92 directly above the rocker arm pivot pin 74 so as to move through the same stroke as the second ends 82 of the pivot arms 72 . The upper end of the spring 100 is seated on a stationary seat 104 that is fixed to the frame assembly 50. Each compression spring 100 is stiff enough so that 50% or more, and even 80% or more, of the weight of the machine 20 is borne by the floating bogie assemblies 46 and 48. If the total nominal vehicle weight is about 2400 lbs., each of the four springs 100 is configured to carry a load of about 525 lbs, so that the total load carried by all four springs 100 is about 2100 lbs.

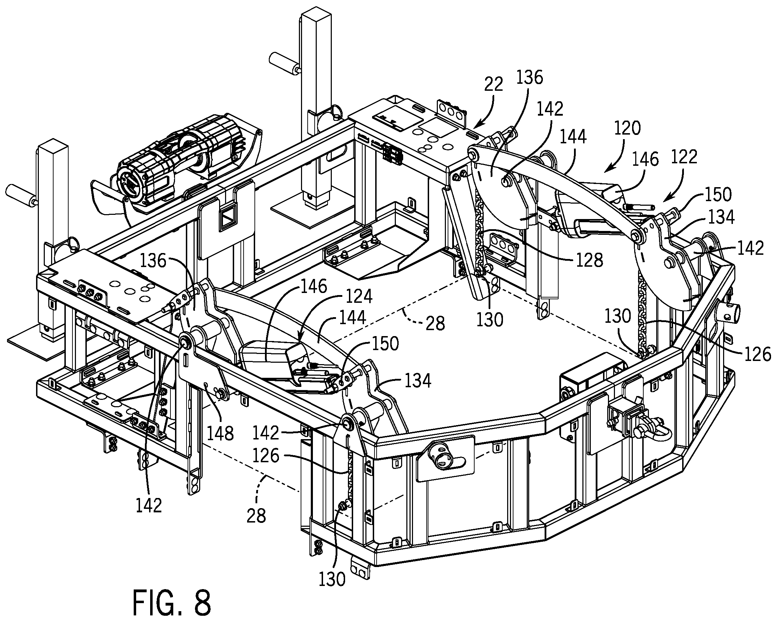

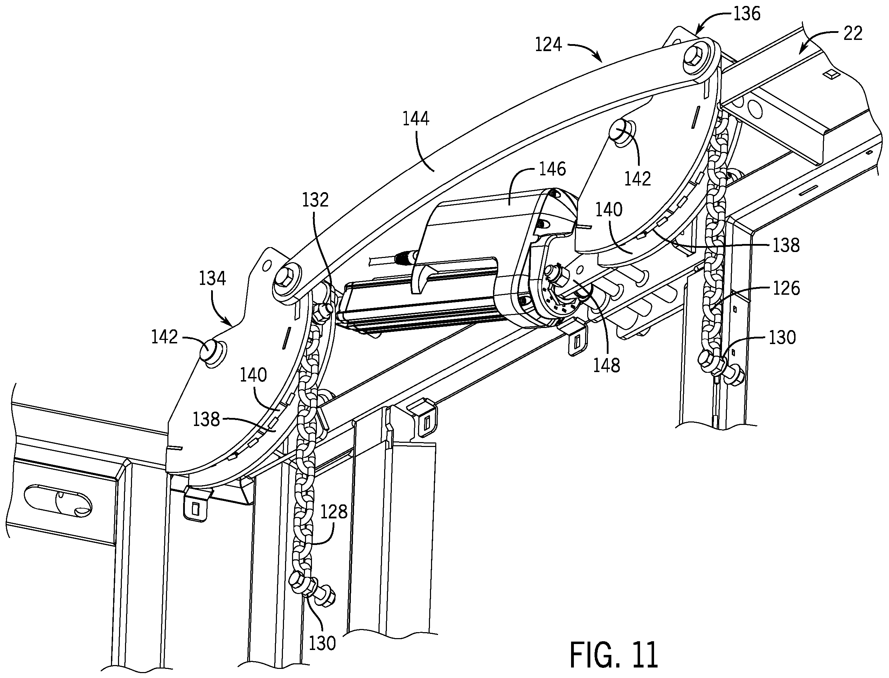

Turning now to FIGS. 8-12, the cutter deck 28, prime mover 30, and other components of the slope mower 20 are mounted on the frame 22 by a deck suspension system 120 that permits a wide range of vertical movement of at least 5", and of at least 7", and even 11" or more, through an essentially vertical stroke, assuring that the deck remains horizontal regardless of its positioning along the frame (assuming the slope mower is positioned horizontally). This at least essentially prevents horizontal shifting of the machine's center of gravity with resulting strain on the machine's structural components. It also inhibits or prevents the cutter deck 28 from tilting. The suspension system 120 of the illustrated embodiment comprises a four point system having four flexible links located at or near each corner of the deck, that can be wound onto or off from pulleys. If, as in the example below, the flexible links comprise chains, the pulleys might more precisely be considered chain followers. The two terms are used interchangeably herein.

The suspension system 120 of this embodiment has two identical suspension assemblies 122, 124 located on opposite sides of the machine. Referring to suspension assembly 124 by way of example, each suspension assembly has front and rear chains 126, 128, each having a bottom end 130 pinned to the cutter deck 28 and having an upper end 132 attached to a respective chain follower or pulley 134 or 136. Each pulley 134, 136 comprises a sheave 138 defining a central groove 140 that defines a support surface for receiving the chain 126 or 128. The rotational stroke of each pulley 134, 136 is limited to less than 90 degrees, so the sheave 138 need not extend around the entire circumference of the pulley 134 or 136. Each pulley 134, 136 is rotatably mounted on the frame 22 via an axle 142.

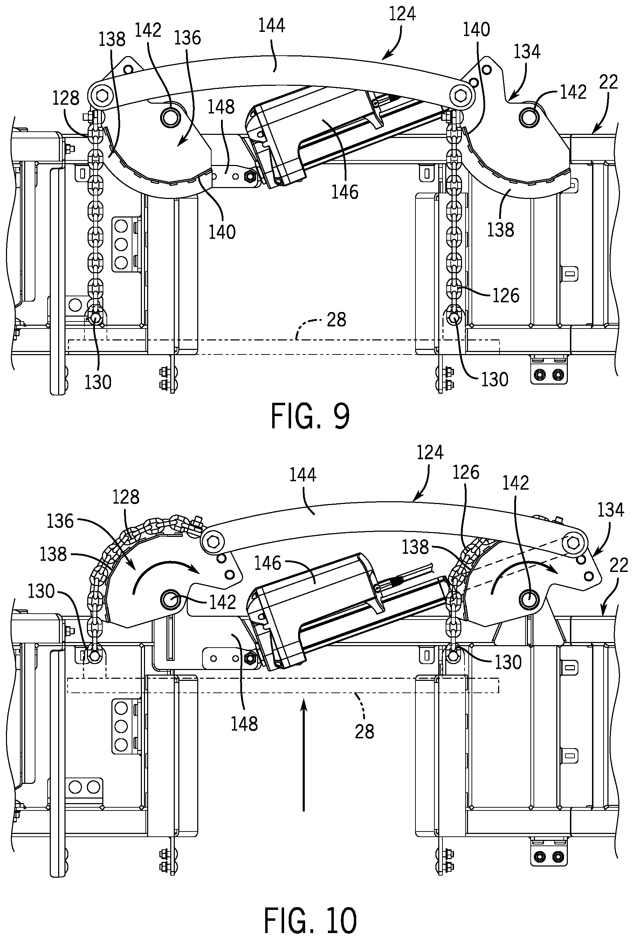

Still referring to FIGS 8-11, the front and rear pulleys 134, 136 of each suspension assembly 122 or 124 are interconnected so as to move in unison with one another. The interconnection is provided by a curved arm 144 extending longitudinally between the pulleys 134 and 136, with each end of the curved arm 144 being pivotably connected to a respective pulley 134 or 136. A linear drive 146, such as electric drive, is pivotably connected to a stationary mount 148 at its barrel end and to the front pulley 134 via a connecting link 150 (FIG. 8) at its rod end. Extension or retraction of the rod from the barrel drives front pulley 134 through an arc to wind or unwind the chain 126 onto or off from the pulley 134, thus raising or lowering the bottom end 130 of the associated chain 126, and thus of the associated corner of the deck 28, vertically with little or no horizontal motion of the bottom end 130. The rear pulley136 is simultaneously driven to rotate through an equal arc via movement of the curved arm 144, resulting in raising or lowering of the bottom end 130 of chain 128, and thus of the associated corner of the cutter deck 28, by an amount equal to that of the chain 126 and the associated corner of the cutter deck 28. The linear drives 146 can be controlled to simultaneously move through equal strokes under control of a suitable controller (not shown), thus assuring simultaneous movement of all for chains through an equal stroke and purely vertical movement of the cutter deck 28. Compare FIG. 9 to FIG. 10.

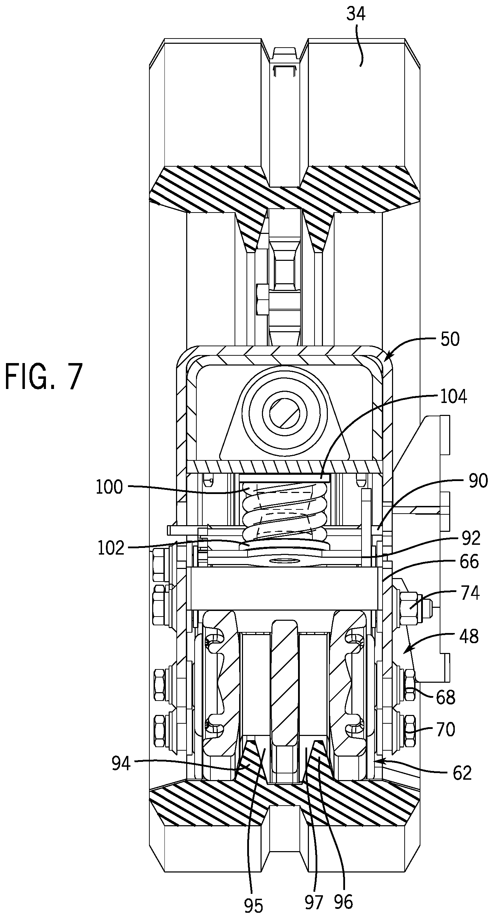

In operation, to propel the slope mower 20 forwardly, the prime mover 30 drives the drive sprockets 36 to rotate, driving each belt 34 to move continuously over the associated drive sprocket 36, the front idler roller 38, the idler bogie assemblies 42, 46, 48, 44 in series, the rear idler roller 40, and back to the drive sprocket 36. The fixed orientation of the fixed bogie assemblies 42 and 44 maintains the desired tension on the belt 34 as it moves between the idler rollers 38 and 40 and the fixed bogies 42 and 44. The bogie rollers 62 and 64 of each of the floating bogie assemblies 46 and 48 can float or move, ensuring firm engagement of both bogie rollers 62 and 64 with the belt, even if the track assembly 24 or 26 encounters a sharp change of grade or an obstruction such as a curb or rock as seen in FIGS. 6 and 7. This movement may include movement of the floating bogie 46 or 48 as a unit as result of pivoting movement of the pivot arm 72 against the spring the force of the spring 100, pivoting movement of the rocker arm 66 relative to the pivot arm 72 with resultant movement of the rollers 62 and 64 relative to each other, or a combination of both. The rollers thus reliably follow the belt 34, even if the belt 34 track encounters a depression causing the portion of the belt 34 located directly under a roller 62 or 64 to dip beneath the ground line. The chances for belt sag and/or for the belt 34 to slide laterally off the track also are greatly diminished. Compare FIGS. 3 and 4 to FIGS. 6 and 7. The stops 88 and 89 limit downward movement of the end 82 of the pivot arm 72 to on the order of about 0.75" in this specific embodiment. The stops 75 and 76 similarly limit the stroke of the rocker arm 66 between 5 deg. and 20 deg., and more typically 10 deg., bidirectionally from its centered position, permitting total vertical motion of each floating bogie roller 62 or 64 of on the order of 1.25" in this specific embodiment. The slope mower 20 can be driven in reverse simply by reversing the direction of rotation of the drive sprockets 36, and can be turned by rotating the drive sprockets 36 for the left and right track assemblies 24 and 26 at different speeds and even in different directions.

In order to change cut depth and/or to raise the cutter deck 28 for transport, the linear drives 146 on both sides of the slope mower 20 are simultaneously driven through the same stroke, resulting in coordinated rotation of all pulleys 134 and 136 and raising or lowering of all chains 126 and 128 simultaneously through the same amount, raising and lowering the deck 28 through a purely vertical stroke of 11 inches or more.

Once the cutter deck 28 is positioned at the desired cutting height, the blades (not shown) can be driven directly or indirectly by the prime mover 30 as the slope mower 20 is propelled by the track assemblies 24 and 26. In the case of a hybrid mower, each blade may be driven independently by a dedicated electric motor, permitting the speed and even direction of blade rotation to be altered relative to one another.

All of these operations can be controlled by a hand-held remote controller located off-board the slope mower 20 and communicating with a remote receiver located on-board the slope mower 20.

Although the best mode contemplated by the inventors of carrying out the present invention is disclosed above, practice of the above invention is not limited thereto. It will be manifest that various additions, modifications and rearrangements of the features of the present invention may be made.

## Claims

1. A vehicle, comprising:
a frame;
a prime mover that is supported on the frame; and
a crawler assembly that supports the prime mover on the ground, the crawler assembly including at least one track assembly that includes
an endless track;
front and rear rollers which are supported on the frame and about which the track rides;
front and rear fixed bogie assemblies that are located longitudinally between the front and rear rollers, each fixed bogie assembly including fixed support that is fixed from vertical motion relative to the frame and at least one bogie roller that is rotatably mounted on the fixed support and that engages the track; and
at least one floating bogie assembly that is located longitudinally between the fixed bogie assemblies, the floating bogie assembly including a floating bogie roller support that is mounted on the frame so as to be movable vertically relative to the frame, at least one floating bogie roller that is rotatably mounted on the floating bogie roller support and that engages the track, and a spring that biases the floating bogie roller support toward the track.

2. The vehicle as recited in claim 1, wherein the track assembly is a first track assembly located on a first side of the vehicle, and further comprising a second track assembly that is located on a second side of the vehicle and that includes at least one floating bogie assembly, and wherein the floating bogie assemblies are configured to bear at last 50% of the weight of the vehicle when the vehicle is traveling over flat, level ground.

3. The vehicle as recited in claim 1, wherein the bogie roller support of the floating bogie assembly support includes a primary support which is biased by the spring and a secondary support that is pivotably mounted on the primary support and upon which the floating bogie roller is rotatably mounted.

4. The vehicle as recited in claim 3, where the primary support includes a pivot arm having a first end which is pivotally supported on the frame and a second end which is spaced longitudinally from the first end and on which the floating bogie roller is supported .

5. The vehicle as recited in claim 4, wherein the secondary support comprises a rocker arm that is pivotally mounted on the second end of the pivot arm so as to pivot about a horizontal pivot axis, wherein the floating bogie roller comprises a front floating bogie roller that is rotatably mounted on the rocker arm in front of the pivot axis, and wherein the floating bogie assembly additionally comprises a second floating bogie roller that is rotatably mounted on the rocker arm behind the pivot axis.

6. The vehicle as recited in claim 5, wherein the rocker arm can pivot between 5 deg. and 20 deg. bidirectionally from a centered position thereof and optionally wherein the pivot arm can pivot downwardly to move the second end downwardly 0.5" to 2.0" from an uppermost position.

7. The vehicle as recited in any of the preceding claims, wherein the vehicle has a deck and a suspension system via which the deck is suspended from the frame so as to be moveable at least essentially purely vertically relative to the frame through a range of at least 7".

8. The vehicle as recited in claim 7, wherein the vehicle comprises a robotic slope mower having a cutter deck on which driven blades are mounted, and wherein the prime mover is mounted on the cutter deck.

9. The vehicle as recited in claim 8, wherein the suspension system comprises
first through fourth pulleys that are mounted on the frame so as to rotate about respective horizontal axes, each pulley having an arcuate support surface; and
first through fourth flexible lines, each of which is connected to one of the pulleys and to the deck;
a drive assembly that is configured to drive the pulleys to rotate in unison through an equal arc to wind or unwind the flexible lines onto or off from the arcuate support surfaces through an equal linear stroke.

10. The vehicle as recited in claim 9, wherein the suspension system comprises
a. first and second curved arms, each having opposed ends pivotally connected to two of the pulleys;
b. first and second linear drives, each of which can be extended and retracted to move two of the pulleys through an equal arc to move the pulleys and flexible lines through an equal stroke.

11. A method of propelling a crawler type vehicle, comprising
a. driving endless tracks of first and second spaced track assemblies over first and second longitudinally spaced rollers that are rotatably supported on a frame,
b. applying tension to the track via
i. first and second longitudinally spaced fixed bogie assemblies that are located longitudinally between the first and second rollers, each fixed bogie assembly including a fixed support that is fixed from vertical movement of the frame and a fixed bogie roller that is rotatably mounted on the fixed support, and
ii. and at least one floating bogie assembly that is located longitudinally between the fixed bogie assemblies, each floating bogie assembly including at least one floating bogie roller that is rotatably mounted on a floating bogie roller support that is movable vertically relative to the frame, the applying tension including, using a spring, biasing the floating bogie roller support toward the track to promote engagement of the floating bogie roller with the track.

12. The method as recited in claim 11, wherein the floating bogie assemblies are configured to bear at last 80% of the weight of the vehicle when the vehicle is traveling over flat, level ground.

13. The method as recited in claim 11 or claim 12, wherein the biasing comprises biasing a pivot arm of each floating bogie roller support to pivot downwardly about a horizontal pivot axis, and wherein, during the tensioning, a rocker arm of each floating bogie roller support rocks about the pivot arm while with first and second longitudinally spaced floating bogie rollers in contact with the associated belt.

14. The method as recited in claim any of claims 11-13 , wherein the vehicle is a mower having a cutter deck on which driven blades can be mounted, and further comprising simultaneously driving first through fourth pulleys through an equal arc to wind or unwind flexible lines through an equal linear stroke, each flexible line being connected to the cutter deck.
